# EUROPÄISCHE PATENTSCHRIFT

(11) **EP 4 539 183 B1**
(45) Veröffentlichungstag und Bekanntmachung des Hinweises auf die Patenterteilung: **01.07.2026**
(21) Anmeldenummer: 23203626.9
(22) Anmeldetag: 13.10.2023
(51) Int. Cl.: H01M 10/052, H01M 50/538, H01M 50/54, H01M 50/545, H01M 50/548, H01M 50/553, H01M 50/566, H01M 50/536, H01M 50/627

(54) **HERSTELLUNG VON BATTERIEZELLEN MITTELS ABLEITERVERLÄNGERUNGEN**
FABRICATION OF BATTERY CELLS USING ARRESTER EXTENSIONS
FABRICATION D'ÉLÉMENTS DE BATTERIE AU MOYEN D'EXTENSIONS DE COLLECTEUR DE COURANT

(43) Veröffentlichungstag der Anmeldung: 16.04.2025
(73) Patentinhaber: Cellforce Group GmbH, 72138 Kirchentellinsfurt (DE)
(72) Erfinder: Gräf, Jürgen, 72072 Tübingen (DE)
(74) Vertreter: Müller Schupfner & Partner Patent- und Rechtsanwaltspartnerschaft mbB (Muc)

(56) Entgegenhaltungen:
- EP-A1- 4 191 759
- DE-A1- 102021 127 860
- US-A1- 2023 246 270

## Beschreibung

Die Erfindung betrifft ein Verfahren zum Herstellen einer Batteriezelle, welche mit zumindest zwei an gegenüberliegenden Seiten angeordneten Batteriepolen ausgestattet ist, wobei mindestens ein Elektrodenpaket mit einer Vielzahl von Anodenfolien und Kathodenfolien, welche durch Separatorfolien voneinander getrennt sind, in einem Zellgehäuse abgeordnet wird. Des Weiteren betrifft die Erfindung eine Batteriezelle.

Neben den sogenannten Pouch-Zellen mit flexiblen bzw. folienartigen Zellgehäusen sind auch Hardcase-Zellen bekannt. Derartige Batteriezellen besitzen ein starres metallisches Gehäuse und können geometrisch in prismatischer Form oder in Form von Rundzellen ausgebildet sein. Die jeweiligen Batteriepole sind an den sogenannten Terminals der Batteriezelle in erhabener Form auf der Außenseite positioniert, um eine vereinfachte, elektrische Anbindung zu ermöglichen. Üblicherweise sind die Batteriepole in einem Zelldeckel der Batteriezelle integriert, die ein Innenvolumen des Zellgehäuses verschließt.

Der Zelldeckel der Batteriezelle ist üblicherweise aus einem Metall, wie beispielsweise Aluminium, Edelstahl oder Stahl mit einer Nickelbeschichtung, gefertigt. Gegenüber dem Zelldeckel isoliert werden Batteriepole eingebracht, die mit Kollektoren verbunden sind. Die Batteriepole bilden dabei einen außenseitigen elektrischen Anschluss aus und sind elektrisch leitend mit den zum Innenvolumen des Zellgehäuses zugewandten Kollektoren verbunden.

Im Innenvolumen des Zellgehäuses werden bei elektrochemischen Speichern, wie beispielsweise einer Lithium-Ionen-Batterien, Elektrodenpakete angeordnet, die aus einander abwechselnden, Lagen bzw. Schichten von Anoden, Kathoden und Separatoren bestehen. Derartige Anodenfolien und Kathodenfolien können durch Wickeln oder Stapeln geformt und in dem Innenvolumen des Zellengehäuses für den endgültigen Gebrauch durch Kunden positioniert werden. Die jeweiligen Anodenfolien und Kathodenfolien müssen im Rahmen der Batteriezellenherstellung mit den Batteriepolen verbunden werden. Hierzu dienen Anodenableiter und Kathodenableiter als Verbindungsleitungen zwischen den Batteriepolen und den Anodenfolien bzw. Kathodenfolien. Zellseitig regulär werden an die beiden Kollektoren die unbeschichteten Enden der Kupferträgerfolien der Anodenfolien sowie der Aluminiumträgerfolien der Kathodenfolien geschweißt, die aus dem Elektrodenpaket herausstehen. Für die Bereitstellung eines optimalen Werkzeugzugangs für die Schweißung mit den Kollektoren müssen die Anodenableiter und Kathodenableiter in Überlänge ausgeführt werden. Diese Überlänge resultiert in der Verwendung von Elektroden mit breiten unbeschichteten Bereichen und in einem erhöhten Materialbedarf und Verschnitt.

Die Fertigung der Elektroden erfolgt in der Regel als Endlosband. Dabei werden aktive Beschichtungen der Trägerfolien durch einen Kalander zwischen Walzenpaaren verdichtet und die Anodenfolien bzw. Kathodenfolien anschließend ausgestanzt. Aufgrund der erforderlichen Überlänge werden breite, unbeschichtete Bereiche der Trägerfolien vorgesehen, die beim Kalandrieren besonders anfällig für Verzug sein können.

Die vorliegende Erfindung hat daher die Aufgabe, ein Verfahren zum Herstellen einer Batteriezelle zu schaffen, bei dem der Materialverschnitt reduziert und die Verbindung von Ableitern mit Kollektoren vereinfacht wird. Diese Aufgabe wird durch die im unabhängigen Verfahrensanspruch 1 und dem unabhängigen Produktanspruch 16 angegebenen Merkmale gelöst. Weitere vorteilhafte Ausgestaltungen der Erfindung sind Bestandteil der Unteransprüche.

DE 10 2021 127860 A1 beschreibt ein Verfahren zur Herstellung einer Batteriezelle. In einem Schritt des Verfahrens wird ein Elektrodenwickel mit endseitig freiliegenden Anodenableitern und Kathodenableitern bereitgestellt. Die Anodenableiter und Kathodenableiter werden jeweils gebündelt und verschweißt. Anschließend wird endseitig jeweils ein Stromableiter mit den Anodenableitern und Kathodenableitern verbunden. Die Stromableiter dienen gleichzeitig als Kollektorplatte und Terminal und verschließen das Zellgehäuse bzw. den Zellgehäusemantel endseitig.

EP 4 191 759 A1 offenbart ein Verfahren zum Herstellen von Batteriezellen, bei dem die jeweiligen Ableiter unmittelbar mit den Kollektorplatten der Zelldeckel verbunden werden.

Aus der US 2023/246270 A1 ist eine Hard-Case Zelle mit Zelldeckeln bekannt. Die Zelldeckel sind auf einander gegenüberliegenden Seiten des Zellgehäusemantels angeordnet.

Gemäß einem Aspekt der Erfindung wird ein Verfahren zum Herstellen einer Batteriezelle bereitgestellt, welche mit zumindest zwei an gegenüberliegenden Seiten angeordneten Batteriepolen ausgestattet ist. Dabei können die Batteriepole in zwei gegensätzliche Richtungen zeigen bzw. ausgerichtet sein.

In einem Schritt wird mindestens ein Elektrodenpaket mit einer Vielzahl von Anodenfolien und Kathodenfolien, welche durch Separatorfolien voneinander getrennt sind, bereitgestellt. Das mindestens eine Elektrodenpaket kann in gefalteter oder in gestapelter Form ausgestaltet sein. D.h. die Anodenfolien, Kathodenfolien und Separatorfolien können in Form zugeschnitten, übereinander gelegt sein oder in Form von langen und gewickelten Bändern bereitgestellt werden.

Die Anodenfolien weisen endseitig Anodenableiter und die Kathodenfolien endseitig Kathodenableiter auf. Dabei können die Anodenableiter und die Kathodenableiter von den zugeschnittenen oder gewickelten Anodenfolien und Kathodenfolien randseitig abstehen. Vorteilhafterweise werden die Anodenableiter der Anodenfolien an einer ersten Seite und die Kathodenableiter der Kathodenfolien an einer zweiten Seite des Elektrodenpakets gebündelt bzw. ausgerichtet.

In einem weiteren Schritt werden die gebündelten Anodenableiter und/oder Kathodenableiter zumindest bereichsweise mit mindestens einer Ableiterverlängerung elektrisch leitend verbunden. Dabei können nur die Anodenableiter, nur die Kathodenableiter oder die Kathodenableiter und die Anodenableiter durch einen oder mehrere Ableiterverlängerungen verlängert werden. Die Anodenableiter oder die Kathodenableiter können als sogenannte Fähnchenpakete vorliegen und können bei Bedarf flexibel mit der Ableiterverlängerung bzw. Stromschiene verlängert werden, welche randseitig an die Anodenableiter oder Kathodenableiter des Elektrodenpaketes geschweißt wird und die Verbindung zum Kollektor des ersten und/oder zweiten Batteriepols ausbildet. Durch diese Maßnahme kann der Verschnitt des Trägerfolienmaterials der Anodenfolien und/oder Kathodenfolien zum Ausbilden von ausreichend langen Anodenableitern und/oder Kathodenableitern reduziert. Hierdurch kann auch die Fertigbarkeit der Anodenfolien und der Kathodenfolien verbessert werden, da auszubildenden Anodenableiter und/oder Kathodenableiter in Form eines unbeschichteten Trägerfolienmaterials kurz ausgestaltet sein kann, um einen Materialverzug bei der Herstellung der Anodenfolien und/oder Kathodenfolien zu minimieren.

Das mindestens eine mit mindestens einer Ableiterverlängerung versehene Elektrodenpaket wird in ein Zellgehäuse hineingesetzt. Je nach Ausgestaltung kann dieser Schritt nach dem Verbinden des ersten Batteriepols oder nach dem Verbinden des zweiten Batteriepols erfolgen.

Die Anodenableiter werden direkt oder indirekt über die mindestens eine Ableiterverlängerung mit einem Kollektor eines ersten Batteriepols und die Kathodenableiter direkt oder indirekt über die mindestens eine Ableiterverlängerung mit einem Kollektor eines zweiten Batteriepols elektrisch leitend verbunden.

In einem weiteren Schritt wird das Zellgehäuse durch den ersten Batteriepol und den zweiten Batteriepol verschlossen. Das Zellgehäuse kann hierzu an zwei gegenüberliegenden Seiten geöffnet sein, um einen Aufnahmeraum für das mindestens eine Elektrodenpaket auszubilden. Die beiden geöffneten gegenüberliegenden Seiten bzw. Öffnungen des Zellgehäuses können nach dem Einbringen des mindestens einen Elektrodenpakets durch die Batteriepole verschlossen werden.

Erfindungsgemäß weist die Ableiterverlängerung mindestens eine Ausrichthilfe zum Ausrichten der Ableiterverlängerung an dem Kollektor des ersten Batteriepols und/oder dem Kollektor des zweiten Batteriepols auf. Der jeweilige Kollektor kann ebenfalls eine kollektorseitige Ausrichthilfe aufweisen, die mit der ableiterseitigen Ausrichthilfe korrespondieren bzw. wechselwirken kann. Vorteilhafterweise wird die mit den Anodenableitern und/oder Kathodenableiter direkt oder indirekt über die verbundene Ableiterverlängerung mittels der Ausrichthilfe an dem Kollektor des ersten Batteriepols und/oder dem Kollektor des zweiten Batteriepols positioniert. Mittels der Ausrichthilfe kann die Ableiterverlängerung besonders präzise an dem Kollektor ausgerichtet werden. In einem anschließenden Schritt kann die an dem Kollektor ausgerichtete Ableiterverlängerung mit dem Kollektor verbunden werden. Dies kann beispielsweise durch Löten oder Schweißen erfolgen. Dabei kann die Ableiterverlängerung beispielsweise unmittelbar an der Ausrichthilfe geschweißt oder gelötet werden, um eine elektrisch leitfähige Verbindung auszubilden.

Die Reihenfolge der Schritte des erfindungsgemäßen Verfahrens ist in keiner Weise beschränkt oder festgelegt. Insbesondere können bestimmte Verfahrensschritte in beliebiger Reihenfolge umgesetzt werden.

Beispielsweise kann zuerst ein erster Batteriepol über den entsprechenden Kollektor mit dem Anodenableiter verbunden und umgeklappt werden, anschließend das Elektrodenpaket mit dem ersten Batteriepol in das Zellgehäuse hineingeschoben werden, wobei der erste Batteriepol eine erste Öffnung des Zellgehäuses verschließt. Zum Schluss kann der zweite Batteriepol direkt oder indirekt mittels einer Ableiterverlängerung mit dem zweiten Batteriepol verbunden werden. Ein Umklappen des zweiten Batteriepols verschließt hierbei eine zweite Öffnung des Zellgehäuses.

Alternativ oder zusätzlich kann das mindestens eine Elektrodenpaket vor oder nach dem Verbinden von mindestens einer Ableiterverlängerung in das Zellgehäuse hineingeschoben und anschließend gleichzeitig oder nacheinander mit beiden Batteriepolen elektrisch leitend gekoppelt werden. Nach einem anschließenden Umklappen der Batteriepole kann das Zellgehäuse verschlossen werden.

Vorteilhafterweise erfolgt die Verbindung mit dem Kollektor indirekt über die Ableiterverlängerung, wenn eine Ableiterverlängerung an den Anodenableitern oder Kathodenableitern eine Ableiterverlängerung angeschlossen wird. Wird beispielsweise an einem Ableiter keine Ableiterverlängerung eingesetzt, kann die Verbindung mit dem entsprechenden Kollektor direkt bzw. unmittelbar erfolgen. An mindestens einer Seite des Elektrodenpakets kann zumindest eine Ableiterverlängerung verwendet werden.

Die Elektrolytlösung für die Batteriezelle kann noch vor dem Verschließen oder nach dem Verschließen des Zellgehäuses eingefüllt werden. Das Verschließen des Zellgehäuses kann fluiddicht erfolgen. Hierzu können die Batteriepole als Zelldeckel ausgestaltet sein oder in Zelldeckel eingebracht sein, die die Öffnungen des Zellgehäuses abdichten. Die Batteriepole bzw. Zelldeckel können in das Zellgehäuse hineingepresst und/oder mit dem Zellgehäuse verschweißt werden, um den Aufnahmeraum des Zellgehäuses fluiddicht auszubilden. Zum Befüllen des Zellgehäuses mit einem Elektrolyt kann je nach Ausgestaltung eine Befüllöffnung im Zellgehäuse, in mindestens einem Zelldeckel und/oder an mindestens einem Batteriepol vorgesehen sein.

Nach einem weiteren Aspekt der Erfindung wird eine Batteriezelle bereitgestellt, die mindestens ein Elektrodenpaket mit einer Vielzahl von Anodenfolien und Kathodenfolien aufweist. Die Anodenfolien und Kathodenfolien sind durch Separatorfolien voneinander getrennt. Die Anodenfolien sind an einer ersten Seite mit Anodenableitern und die Kathodenfolien sind an einer zweiten Seite mit Kathodenableitern versehen, die zumindest bereichsweise als abisolierte bzw. unbeschichtete Abschnitte einer Trägerfolie ausgeführt sein können. Das gesamte Elektrodenpaket ist in einem Zellgehäuse angeordnet. Die Anodenableiter sind direkt oder indirekt über eine Ableiterverlängerung mit einem Kollektor eines ersten Batteriepols und/oder die Kathodenableiter sind direkt oder indirekt über eine Ableiterverlängerung mit einem Kollektor eines zweiten Batteriepols elektrisch verbunden. Der erste Batteriepol und der zweite Batteriepol sind dazu eingerichtet, das Zellgehäuse endseitig zu verschließen.

Die Batteriezelle kann je nach Ausgestaltung eine flüssige Elektrolytlösung aufweisen, mit welcher ein Aufnahmeraum des Zellgehäuses befüllt ist.

Weiterhin bilden die Batteriepole eine elektrische Verbindung zu den Anodenfolien und Kathodenfolien des Elektrodenpakets aus, um ein Laden und Entladen der Batteriezelle zu ermöglichen.

Gemäß einem Ausführungsbeispiel wird mindestens eine Ableiterverlängerung aus einem Vollmaterial oder aus einer Vielzahl von zumindest bereichsweise miteinander verbundenen oder nicht miteinander verbundenen Materiallagen bereitgestellt, um die Anodenableiter und/oder Kathodenableiter zu verlängern. Die Ableiterverlängerung kann beispielsweise in Form einer Stromschiene oder einer Stromleitfolie ausgestaltet sein. Dabei kann die Ableiterverlängerung aus einem Metall oder einer Metalllegierung, wie beispielsweise Kupfer oder Aluminium, bestehen.

Je nach Ausgestaltung kann die Ableiterverlängerung zumindest bereichsweise mit einer elektrischen Isolierung versehen oder beschichtet sein, um einen elektrisch leitfähigen Kontakt mit Batteriepolen oder dem Zellgehäuse zu vermeiden. Die elektrische Isolierung kann in Form einer Lackierung oder Beschichtung oder einer flexiblen oder schrumpfbaren Hülle ausgestaltet sein.

Die Ableiterverlängerung kann vorteilhafterweise jeweils aus dem Werkstoff wie die Ableiter bestehen. Der Werkstoff bzw. das Material kann beispielsweise Kupfer für ein Verbinden von Anodenableitern und Aluminium für ein Verbinden mit den Kathodenableitern sein.

Weiterhin kann die mindestens eine Ableiterverlängerung ebenfalls im Wesentlichen einen Leitungsquerschnitt zum Leiten eines elektrischen Stroms aufweisen, welcher einem Leitungsquerschnitt des entsprechend angeschlossenen Ableiters entspricht. Der Leitungsquerschnitt der Ableiterverlängerung kann mittels einer Materialstärke bzw. Dicke und einer Breite der Ableiterverlängerung eingestellt werden. Hierdurch kann ein konstanter spezifischer elektrischer Widerstand eingestellt werden, welcher sich zwischen dem Kollektor und dem Elektrodenpaket nicht verändert.

Eine aus einem Vollmaterial hergestellte Ableiterverlängerung kann aus einem weichen oder biegbaren Massivmaterial hergestellt sein. Beispielsweise kann eine Ableiterverlängerung für eine Verlängerung der Anodenableiter aus Kupfermaterial in weichgeglühtem und nicht kaltverfestigtem Zustand gefertigt sein, sodass sich diese Ableiterverlängerung mit einem besonders geringen Kraftaufwand biegen lässt.

Die mindestens eine Ableiterverlängerung kann zumindest bereichsweise besonders biegsam ausgestaltet sein, wenn diese im Bereich von mindestens einer Biegestelle durch mehrere zumindest im Bereich der Biegestelle nicht miteinander verbundene Materiallagen ausgebildet ist. Somit kann die Ableiterverlängerung aus lamelliertem Material mit einzelnen dünnen Materialfolien ausgeführt sein. Die Ableiterverlängerung lässt sich deswegen mit geringerer Kraft und auf einem engeren Radius falten, wodurch Bauraum eingespart werden kann.

Bei einer besonders vorteilhaften Ausgestaltung der Ableiterverlängerung kann diese partiell, insbesondere im Bereich von Biegestellen oder vollständig aus einzelnen Metallfolienlagen zusammengesetzt sein, um gezielt lokale Biegestellen einzubringen. Derartige Biegestellen können ein reproduzierbares Falten der Ableiterverlängerung und der Ableiter ermöglichen.

Dabei können Bereiche der Ableiterverlängerung vorgesehen sein, die mechanisch miteinander verbundene Materiallagen bzw. Metallfolienlagen aufweisen, um nicht zu faltende Bereiche zu definieren.

Bei einem Falten mehrerer Materiallagen der Ableiterverlängerung, die zumindest lokal nicht miteinander verbunden sind, können diese aneinander vorbei gleiten oder sich aufspreizen bzw. voneinander beabstanden und dergleichen, wodurch geringere Biegeradien erzielbar sind und die Materialbelastung beim Biegen minimiert wird.

Nach einer weiteren Ausführungsform werden die Anodenableiter und/oder die Kathodenableiter entlang einer Breitenrichtung der Batteriezelle zentriert oder dezentriert gebündelt. Durch diese Maßnahme können die Ableiter für eine Faltung bei einem weiteren Zusammenbau der Batteriezelle optimal vorbereitet werden. Beispielsweise können basierend auf der Position der Bündelung die erforderlichen Biegeradien beim Falten der Ableiter mit der Ableiterverlängerung begrenzt bzw. eingestellt werden. Eine dezentrierte bzw. randseitige Bündelung der Ableiter kann nach einer 90° Biegung eine Ausnutzung einer gesamten Breite des Zellgehäuses für eine weitere Biegung oder Faltung ermöglichen. Hierdurch kann die Designfreiheit erhöht und eine Ausgleichsmöglichkeit für eine, beispielsweise thermisch oder mechanisch bedingte, Längenvariation der Ableiter und Ableiterverlängerungen realisiert werden.

Eine weitere Verbindung der Ableiter kann vereinfacht werden, wenn die gebündelten Anodenableiter und/oder Kathodenableiter zu einem Stapel zusammengefasst und durch das Verbinden mit der mindestens einen Ableiterverlängerung und/oder durch Einbringen von mindestens einer Verbindungsnaht in gebündelter Form fixiert werden. Die Ableiter können beispielsweise stoffschlüssig oder durch Klemmen oder formschlüssig zusammengefasst werden. Dabei kann das Zusammenfassen der Ableiter eine elektrisch leitfähige Verbindung zwischen den einzelnen Ableitern bzw. Trägerfolien herstellen oder diese in zumindest bereichsweise isolierter Form mechanisch miteinander koppeln.

Die elektrisch leitfähige Verbindung der Ableiter, beispielsweise durch Schweißen oder Löten, den Kollektoren kann zur Sicherstellung eines optimalen Werkzeugzugangs, z.B. für ein Einbringen eines Laserstrahls und eines Niederhalters bei einer Laserschweißung, außerhalb des Zellgehäuses erfolgen. Je nach Ausgestaltung kann ein Werkzeugzugang für eine Sonotrode und einen korrespondierenden Amboss bereitgestellt werden, um eine Ultraschallschweißung der Ableiter mit dem Kollektor und/oder den Ableiterverlängerungen zu realisieren.

Da die zusammengefassten Ableiter (mit oder ohne einer Ableiterverlängerung) zunächst parallel zu einer Grundfläche des Elektrodenpakets liegen und die Kollektoren in der fertigen Batteriezelle aus Bauraumgründen in der Regel senkrecht hierzu ausgerichtet werden, müssen beim Zusammenbau der Batteriezelle die Ableiter gefaltet werden. Zumindest bereichsweise kann hierdurch eine Überlänge der Anodenableiter erforderlich sein, um einen Werkzeugzugang zu ermöglichen. Die längeren Ableiter können bei der Montage in Schleife bzw. gefaltet angeordnet werden. Eine derartige Überlänge kann besonders vorteilhaft durch mindestens eine Ableiterverlängerung bereitgestellt werden, die auch ohne eine überlange Trägerfolienschicht einen optimalen Werkzeugzugang erzielen kann.

Der Werkzeugzugang zum Verbinden von Kollektoren mit den Ableitern kann besonders vielseitig realisiert werden, wenn die gebündelten Anodenableiter und/oder Kathodenableiter zumindest bereichsweise mit mindestens einer folienförmigen oder plattenförmigen oder vorgebogenen Ableiterverlängerung elektrisch leitend verbunden werden.

Nach einer weiteren Ausführungsform wird die mindestens eine vorgebogene Ableiterverlängerung in Form eines Bogens oder S-förmig oder U-förmig vor dem elektrisch leitenden Verbinden mit den Anodenableitern und/oder Kathodenableitern gebogen oder gefaltet. Durch diese Maßnahme kann die Ableiterverlängerung im Vorfeld gebogen werden und beim Verbinden mit den Anodenableitern und/oder Kathodenableitern, beispielsweise mittels eines Niederhalters, zumindest bereichsweise plan gebogen werden. Diese Biegung ist vorteilhafterweise elastisch.

Somit wird gemäß einer vorteilhaften Ausführungsform die mindestens eine vorgebogene Ableiterverlängerung zum Ausbilden einer elektrischen Verbindung mit einem Kollektor zumindest bereichsweise elastisch flach verformt. Dabei kann die Ableiterverlängerung im ersten Schritt plan bzw. flach durch einen Niederhalter elastisch verformt werden. Nach dem Verbinden der Ableiterverlängerung mit Anodenableitern und/oder Kathodenableitern kann der Niederhalter gelöst oder entfernt werden, wobei die Ableiterverlängerung in ihre vorgebogene Form zurückkehren kann. Hierdurch wird ein Krafteintrag zum Biegen oder Falten der Ableiter und/oder der Ableiterverlängerung minimiert, sodass die Gefahr für Beschädigungen des Elektrodenpakets bei der Montage der Batteriezelle ebenfalls sinkt.

Gemäß einem weiteren Ausführungsbeispiel werden mindestens zwei zueinander benachbarte Elektrodenpakete bereitgestellt, wobei die gebündelten Anodenableiter und/oder Kathodenableiter eines ersten Elektrodenpakets und eines zweiten Elektrodenpakets zumindest bereichsweise mit mindestens einer Ableiterverlängerung elektrisch leitend verbunden werden. Durch diese Maßnahme können die Ableiter beider Elektrodenpakete über gemeinsame Verbindungsnähte mit einer Ableiterverlängerung gekoppelt werden.

Bei einer alternativen Ausführungsform werden die Anodenableiter des ersten Elektrodenpakets zu den Anodenableitern des zweiten Elektrodenpakets entlang mindestens einer Raumrichtung versetzt oder einander überlappend mit der Ableiterverlängerung verbunden. Hierdurch kann die zu schweißende Dicke der Ableiter und der Ableiterverlängerung reduziert werden, wodurch eine zuverlässigere Schweißung ermöglicht wird.

Alternativ oder zusätzlich werden die Kathodenableiter des ersten Elektrodenpakets zu den Kathodenableitern des zweiten Elektrodenpakets entlang mindestens einer Raumrichtung versetzt oder einander überlappend mit der Ableiterverlängerung verbunden. Diese Maßnahme ermöglicht weitere Freiheiten hinsichtlich der Verbindung mit der Ableiterverlängerung. Insbesondere können hierdurch auch geformte Ableiter der unterschiedlichen Elektrodenpakete einen Überlapp oder Versatz zueinander bilden, welcher vorteilhaft zum Einbringen von mehreren Verbindungsnähten zum Herstellen einer elektrisch leitenden Verbindung zwischen den Ableitern und der Ableiterverlängerung nutzbar ist.

Die Ableiterverlängerung kann durch Schweißen oder Löten besonders robust mit mindestens einem Ableiter verbunden werden, wenn eine Ableiterverlängerung für Anodenableiter aus einer Materialzusammensetzung der Anodenableiter und eine Ableiterverlängerung für Kathodenableiter aus einer Materialzusammensetzung der Kathodenableiter bereitgestellt wird. Dabei kann das Verbinden der Ableiterverlängerung zuverlässig und konsistent durchgeführt werden, wenn diese jeweils aus einem Werkstoff der, beispielsweise gehefteten, Fähnchenpakete bzw. gebündelten Ableiter besteht. Je nach Ausgestaltung kann die Ableiterverlängerung eine Dicke oder eine Materialstärke aufweisen, welche einer Materialstärke der Ableiter, d.h. der Anodenableiter und/oder Kathodenableiter, entspricht.

Nach einer weiteren Ausführungsform werden die Anodenableiter und/oder die Kathodenableiter und/oder die mindestens eine Ableiterverlängerung parallel zu einer Fläche mindestens eines Kollektors ausgerichtet und zum elektrischen Verbinden gegen den Kollektor gepresst. Durch diese Maßnahme kann ein optimaler Werkzeugzugang zum Einbringen einer stoffschlüssigen Verbindung bereitgestellt werden. Dabei können die zu verbindenden Flächen, beispielsweise mittels eines Niederhalters, flächig gegeneinander gepresst werden.

Gemäß einer weiteren Ausführungsform werden nach dem elektrischen Verbinden der erste Batteriepol und/oder der zweite Batteriepol in Richtung des Zellgehäuses, insbesondere um einen Winkel von 90°, geklappt, um das Zellgehäuse zu verschließen. Nach dem Einbringen der elektrisch leitenden Verbindung können Ableiter und/oder die Ableiterverlängerung gebogen und/oder gefaltet werden, um die Öffnungen im Zellgehäuse durch die Batteriepole oder durch Zelldeckel, in welche die Batteriepole eingebracht sind, zu verschließen.

Gemäß einem weiteren Ausführungsbeispiel wird vor und/oder während des Klappens der Batteriepole mindestens eine Ableiterverlängerung elastisch und/oder plastisch verformt. Durch diese Maßnahme kann der für die Ableiterverlängerung erforderliche Raum innerhalb des Zellgehäuses minimiert werden. Bei einer elastischen Verformung der Ableiterverlängerung kann neben einem dynamischen Längenausgleich der elektrischen Verbindung zwischen dem Elektrodenpaket und dem Kollektor auch eine Federkraft realisiert werden, die das Elektrodenpaket gegenüber dem Kollektor oder dem entsprechenden Zelldeckel fixiert oder lagert.

Gemäß einem weiteren Ausführungsbeispiel ist die mindestens eine Ausrichthilfe als mindestens eine Zentrierbohrung ausgestaltet, welche dazu eingerichtet ist, mit mindestens einem Stift und/oder Ausbuchtung des Kollektors zusammenzuwirken. Die die mindestens eine an dem Kollektor positionierte Ableiterverlängerung wird an der Ausrichthilfe und/oder von der Ausrichthilfe beabstandet mit dem Kollektor stoffschlüssig verbunden. Durch diese Maßnahme kann die ableiterseitige Ausrichthilfe mit der kollektorseitigen Ausrichthilfe gekoppelt werden.

Dabei kann an die elektrisch leitfähige Verbindung zwischen der Ableiterverlängerung und dem Kollektor über die Ausrichthilfe erfolgen. Alternativ oder zusätzlich kann die elektrische Verbindung beispielsweise durch eine randseitige Schweißnaht oder Lötstelle entlang eines Rands der Ableiterverlängerung umgesetzt werden.

Nach einer weiteren Ausführungsform wird die Ableiterverlängerung mit einem ersten Winkel gegenüber der ersten Seite des mindestens einen Elektrodenpakets gewinkelt positioniert. Anschließend werden die Anodenableiter des ersten Elektrodenpakets mit der Ableiterverlängerung elektrisch leitend verbunden. In einem weiteren Schritt wird die Ableiterverlängerung mit dem ersten Winkel oder mit einem zweiten Winkel gegenüber der ersten Seite positioniert und mit Anodenableitern des zweiten Elektrodenpakets verbunden.

Nach einer weiteren alternativen oder zusätzlichen Ausführungsform wird die Ableiterverlängerung mit einem ersten Winkel gegenüber der zweiten Seite gewinkelt positioniert. Anschließend werden die Kathodenableiter des ersten Elektrodenpakets mit der Ableiterverlängerung elektrisch leitend verbunden. Weiterhin wird die Ableiterverlängerung mit dem ersten Winkel oder mit einem zweiten Winkel gegenüber der zweiten Seite positioniert und mit Kathodenableiter des zweiten Elektrodenpakets verbunden. Anschließend wird die Ableiterverlängerung mit dem zweiten Winkel oder mit einem dritten Winkel gegenüber der zweiten Seite gedreht und an dem Kollektor des zweiten Batteriepols positioniert und mit dem Kollektor des zweiten Batteriepols verbunden.

Das erste Elektrodenpaket und das zweite Elektrodenpaket können hierbei eine gemeinsame erste Seite und/oder zweite Seite ausbilden, die als Referenz für den Winkel der Ableiterverlängerung fungieren kann. Beispielsweise kann die erste Seite als eine entlang einer Breitenrichtung und/oder Höhenrichtung verlaufende Gerade ausgestaltet sein, gegenüber welcher die Ableiterverlängerung gewinkelt positioniert werden kann, um einen vereinfachten Werkzeugzugang bereitzustellen. Die die Ableiterverlängerung wird weiterhin mit dem zweiten Winkel oder mit einem dritten Winkel gegenüber der ersten Seite gedreht und an dem Kollektor des ersten Batteriepols positioniert bzw. ausgerichtet und anschließend mit dem Kollektor verbunden. Die Einstellung der unterschiedlichen Winkel ermöglicht einen besonders optimalen Werkzeugzugang zum Einbringen von Schweißverbindungen oder Klemmverbindungen zwischen Ableitern und der Ableiterverlängerung sowie der Ableiterverlängerung und dem Kollektor. Dabei kann die Ableiterverlängerung eine vorgebogene Form aufweisen, um beispielsweise die Ableiter randseitig aufzunehmen und den Platzbedarf innerhalb des Zellgehäuses zu minimieren.

Die Ableiterverlängerung kann mit Hilfe einer Haltevorrichtung oder eines Greifers relativ zu den Ableitern und dem Kollektor angeordnet und im Winkel eingestellt werden.

Je nach Ausgestaltung können alle Ableiter der mehreren Elektrodenpakete gemeinsam auf einer ersten Seite der Ableiterverlängerung oder gemeinsam auf einer zweiten Seite der Ableiterverlängerung angeordnet und elektrisch leitend mit der Ableiterverlängerung verbunden werden. Alternativ kann ein Ableiter auf der ersten Seite und mindestens ein weiterer Ableiter auf der zweiten Seite der Ableiterverlängerung angeordnet und mit dieser verbunden werden. Somit können die Ableiter, welche als Anodenableiter oder als Kathodenableiter ausgestaltet sein können, frontseitig oder rückseitig mit der Ableiterverlängerung verbunden werden.

Nachstehend werden mehrere Ausführungsbeispiele der Erfindung anhand der Zeichnungen näher erläutert. Es zeigen:
Fig. 1 eine perspektivische Darstellung eines Elektrodenpakets in Form eines Stapels,
Fig. 2 eine perspektivische Darstellung eines Elektrodenpakets aus Fig. 1 mit gebündelten Ableitern,
Fig. 3 eine Detailansicht von gebündelten Anodenableitern mit einer verbundenen Anodenverlängerung,
Fig. 4 eine perspektivische Darstellung zum Veranschaulichen eines Verfahrensschritts gemäß einer Ausführungsform der Erfindung, bei dem das Elektrodenpaket in ein Zellgehäuse eingesetzt wird,
Fig. 5 eine seitliche Schnittdarstellung zum Veranschaulichen von indirekt über eine Ableiterverlängerung mit einem Kollektor elektrisch gekoppelten Anodenableitern,
Fig. 6 eine seitliche Schnittdarstellung zum Veranschaulichen einer Faltung der Ableiterverlängerung bei einem Verschließen des Zellgehäuses gemäß einem Ausführungsbeispiel,
Fig. 7 eine seitliche Schnittdarstellung zum Veranschaulichen einer Ableiterverlängerung gemäß einem weiteren Ausführungsbeispiel,
Fig. 8 eine perspektivische Darstellung einer durch ein erfindungsgemäßes Verfahren hergestellten Batteriezelle gemäß einer Ausführungsform der Erfindung, und
Fig. 9 seitliche Schnittdarstellungen zum Veranschaulichen eines erfindungsgemäßen Verfahrens zum Herstellen von Batteriezellen gemäß einer weiteren Ausführungsform.

In den Abbildungen kennzeichnen identische Bezugsziffern dieselben Elemente bzw. konstruktiven Bestandteile. Die Größen und relativen Positionen der Elemente in den Abbildungen sind nicht unbedingt maßstabsgetreu gezeichnet, und einige dieser Elemente sind vergrößert dargestellt und der Übersicht halber angepasst positioniert. Darüber hinaus sollen die besonderen Formen der gezeichneten Elemente keine Informationen über die tatsächliche Form der einzelnen Elemente vermitteln, sondern wurden lediglich zur leichteren Erkennbarkeit in den Abbildungen ausgewählt.

Die Figuren veranschaulichen ein erfindungsgemäßes Verfahren zum Herstellen einer Batteriezelle 100, welche mit zumindest zwei an gegenüberliegenden Seiten angeordneten Batteriepolen 101, 102 ausgestattet ist. Dabei zeigen die Batteriepole 101, 102 in den dargestellten Ausführungsbeispielen in zwei gegensätzliche Richtungen bzw. an gegenüberliegenden Schmalseiten. Das Verfahren wird am Beispiel der Herstellung einer als prismatische Hardcase-Zelle ausgestalteten Batteriezelle 100 beschrieben.

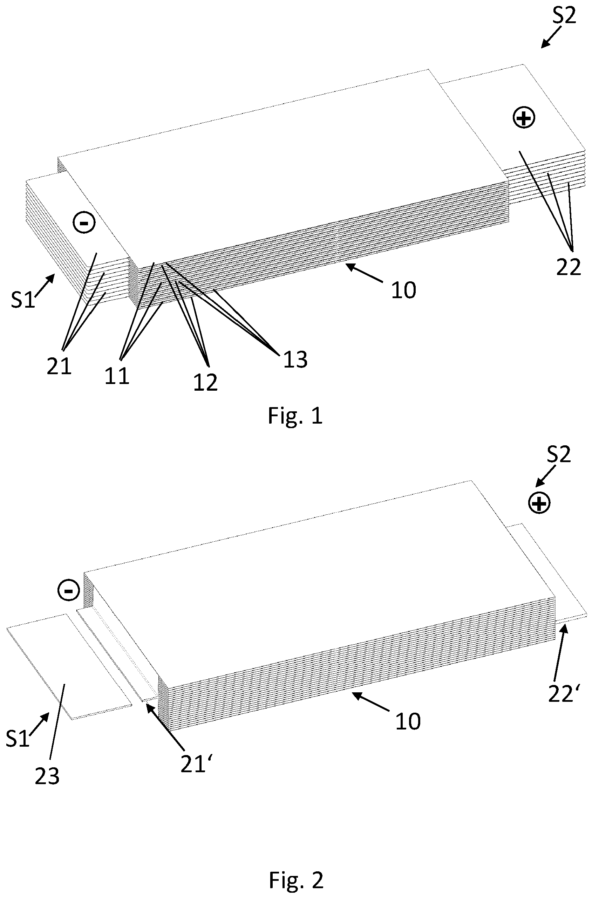

Die Fig. 1 zeigt eine perspektivische Darstellung eines Elektrodenpakets 10 in Form eines Stapels. Der Übersicht halber wird ein Elektrodenpaket 10 bereitgestellt. Das Verfahren ist jedoch nicht auf ein Elektrodenpaket 10 beschränkt. Insbesondere können zwei und mehr nebeneinander angeordnete Elektrodenpakete 10 bereitgestellt werden.

Die Fig. 1 veranschaulicht einen Schritt des Verfahrens, bei dem mindestens ein Elektrodenpaket 10 mit einer Vielzahl von Anodenfolien 11 und Kathodenfolien 12, welche durch Separatorfolien 13 voneinander getrennt sind, bereitgestellt wird. Beispielhaft ist das mindestens eine Elektrodenpaket in gestapelter Form ausgestaltet. Hierdurch sind die Anodenfolien 11, Kathodenfolien 12 und Separatorfolien 13 in rechteckiger Form zugeschnitten und übereinander gelegt.

Die Anodenfolien 11 weisen endseitig Anodenableiter 21 und die Kathodenfolien 12 endseitig Kathodenableiter 22 auf. Dabei stehen die Anodenableiter 21 und die Kathodenableiter 22 von den zugeschnittenen Anodenfolien 11 und Kathodenfolien 12 randseitig ab. Die Anodenableiter 21 der Anodenfolien 11 stehen an einer ersten Seite S1 des Elektrodenpakets 10 und die Kathodenableiter 22 der Kathodenfolien 12 an einer zweiten Seite S2 des Elektrodenpakets 10 ab. Hierdurch sind die Anodenableiter 21 und die Kathodenfolien 12 derart angeordnet, dass die Anodenableiter 21 und die Kathodenableiter 22 ausgerichtet sind.

Die Fig. 2 zeigt eine perspektivische Darstellung eines Elektrodenpakets aus Fig. 1 mit gebündelten Ableitern 21, 22. Der Übersicht halber kann unter dem Begriff Ableiter 21, 22 die Verwendung von Anodenableitern 21 und/oder Kathodenableitern 22 verstanden werden. Die Fig. 2 zeigt einen weiteren Schritt des erfindungsgemäßen Verfahrens, bei dem zunächst die als sogenannte Kupferfähnchen ausgestaltete Anodenableiter 21 der Anodenfolien 11 entlang einer Breitenrichtung B mittig bzw. relativ zum Elektrodenpaket 10 zentriert gelegt und anschließend geheftet bzw. gebündelt werden. Analog zu der ersten Seite S1 werden an der zweiten Seite S2 die als Aluminiumfähnchen ausgestalteten Kathodenableiter 22 der Kathodenfolien randseitig des Elektrodenpakets 10 gelegt und ebenfalls geheftet.

Das Heften bzw. Bündeln der Anodenableiter 21 und der Kathodenableiter 22 zu gebündelten Anodenableitern 21' und gebündelten Kathodenableitern 22' erfolgt beispielhaft durch Ultraschallschweißung mit einem nicht dargestellten Amboss und einer Sonotrode.

Die Fig. 2 zeigt auch die Verwendung einer Ableiterverlängerung 23 an den gebündelten Anodenableitern 21'. Die dargestellte Ableiterverlängerung 23 ist beispielhaft aus einem Vollmaterial hergestellt und weist eine Materialzusammensetzung, die einer Materialzusammensetzung der gebündelten Anodenableiter 21' entspricht. Somit besteht die Ableiterverlängerung 23 im dargestellten Ausführungsbeispiel ausschließlich aus Kupfer oder einer Kupferlegierung.

Die Ableiterverlängerung 23 ist in der Fig. 2 lediglich an die gebündelten Anodenableiter 21' herangeführt.

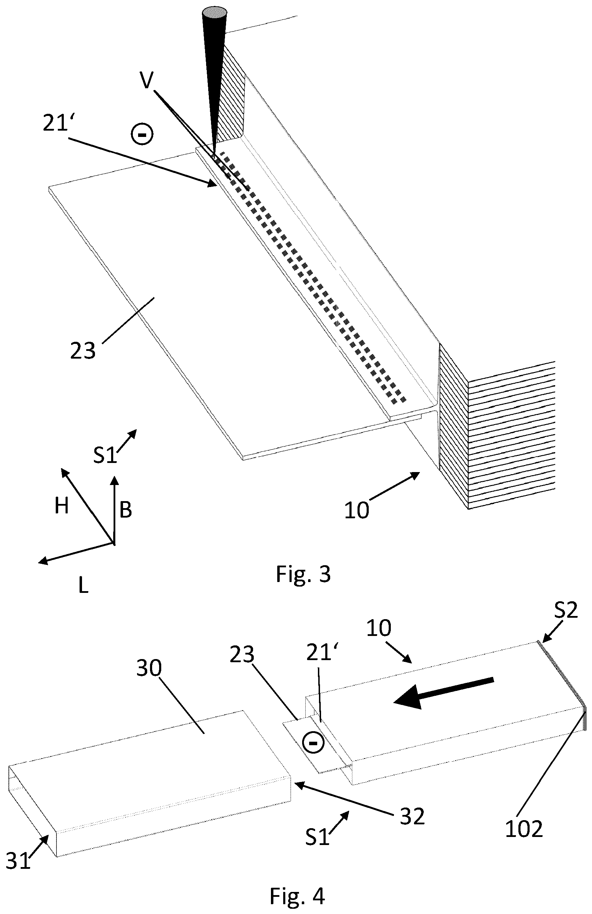

Die Fig. 3 zeigt eine Detailansicht von gebündelten Anodenableitern 21' mit einer durch Laserschweißen verbundenen Anodenverlängerung 23. Beispielhaft werden nur die gebündelten Anodenableiter 21' durch eine Anodenverlängerung 23 entlang einer Längenrichtung L der Batteriezelle 100 bzw. des Elektrodenpakets 10 verlängert.

Durch das Laserschweißen werden beispielhaft zwei Verbindungsnähte V durch die gebündelten Anodenableiter 21' hindurch in die Anodenverlängerung 23 hineingebracht, um eine stoffschlüssige Verbindung herzustellen. Die Verbindungsnähte V werden entlang einer Höhenrichtung H und entlang der Längenrichtung L parallel zueinander versetzt ausgebildet. Die Anodenverlängerung 23 wird randseitig mit den gebündelten Anodenableitern 21' verbunden und bildet eine elektrisch leitfähige Verlängerung der gebündelten Anodenableiter 21'.

Das mindestens eine mit mindestens einer Ableiterverlängerung 23 versehene Elektrodenpaket 10 wird anschließend in ein Zellgehäuse 30 hineingesetzt. Dabei erfolgt dieser Schritt beispielhaft nach einem Verbinden eines zweiten Batteriepols 102 mit den gebündelten Kathodenableitern 22'. Hierfür werden die gebündelten Kathodenableitern 22' mit einem nicht dargestellten Kollektor elektrisch leitend verbunden, welcher elektrisch leitend mit dem zweiten Batteriepol 102 gekoppelt ist. Der zweite Batteriepol 102 ist beispielhaft als ein Pluspol ausgeführt und wird nach dem Verschweißen um 90° gekippt, um das Zellgehäuse 30 einseitig verschließen zu können.

In der Fig. 4 ist eine perspektivische Darstellung zum Veranschaulichen eines Verfahrensschritts gemäß einer Ausführungsform der Erfindung gezeigt, bei dem das Elektrodenpaket 10 in das Zellgehäuse 30 eingesetzt wird. Beispielhaft wird das Elektrodenpaket 10 mit der Ableiterverlängerung 23 voran in das Zellgehäuse 30 hineingeschoben. Dies kann mit oder ohne Hilfsmittel, wie beispielsweise Folien oder Einsetz-Werkzeuge, erfolgen.

Im dargestellten Ausführungsbeispiel ist das Zellgehäuse 30 als ein Strangpressprofil aus einer Aluminiumlegierung ausgestaltet und weist an einer ersten Seite S1 eine erste Öffnung 31 und an einer zweiten Seite S2 eine zweite Öffnung 32 auf.

Das Elektrodenpaket 10 wird derart durch die zweite Öffnung 32 hindurch in ein Innenvolumen 33 des Zellgehäuses 30 hineingeschoben, bis der zweite Batteriepol 102 die zweite Öffnung 32 verschließt. Diese Bewegung entlang der Längenrichtung L wird durch den abgebildeten Pfeil veranschaulicht. An der der zweiten Öffnung 32 gegenüberliegenden ersten Öffnung 31 kann die Ableiterverlängerung 23 hinausragen und somit einen optimalen Werkzeugzugang ermöglichen, um die Ableiterverlängerung 23 elektrisch leitend mit einem Kollektor 111 des ersten Batteriepols 101 zu verbinden.

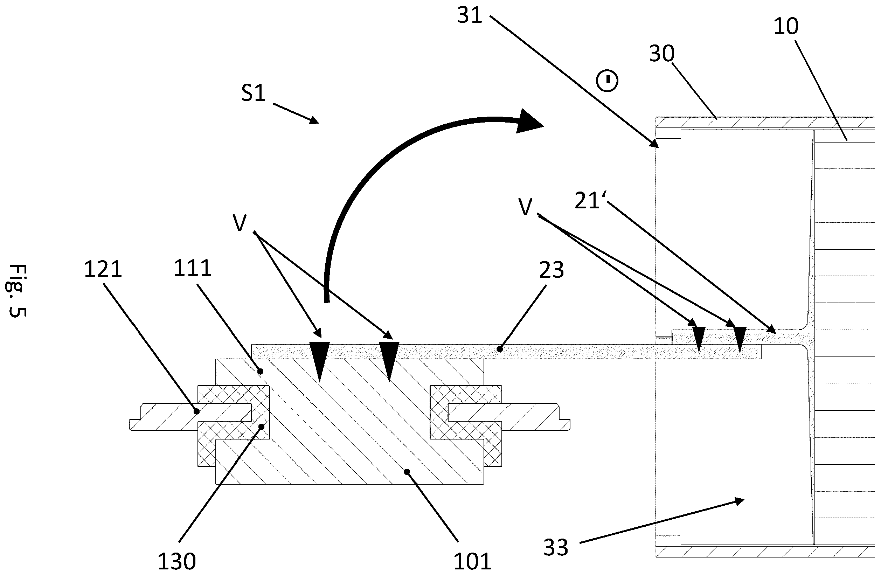

Die Fig. 5 veranschaulicht in einer seitlichen Schnittdarstellung ein indirektes Koppeln der Anodenableiter 21' mit dem Kollektor 111 über die Ableiterverlängerung 23. Hierfür wird der erste Batteriepol 101, welcher in einen ersten Zelldeckel 121 eingebracht und durch einen Isolator 130 gegenüber dem Zelldeckel 121 elektrisch isoliert sein kann, an die Ableiterverlängerung 23 herangeführt.

In einem weiteren Schritt erfolgt eine Verschweißung der Ableiterverlängerung 23 mit dem Kollektor 111 des ersten Zelldeckels 121. Der erste Batteriepol 101, welcher an einer dem Kollektor 111 gegenüberliegenden Seite des Zelldeckels 121 angeordnet ist, ist im dargestellten Ausführungsbeispiel als ein Minuspol ausgestaltet.

Durch das Verbinden der Ableiterverlängerung 23 mit dem Kollektor 111 werden die gebündelten Anodenableiter 21' indirekt elektrisch mit dem Kollektor 111 und dem ersten Batteriepol 101 elektrisch verbunden. Dies erfolgt durch Einbringen von Verbindungsstellen V, beispielsweise mittels Laserschweißen.

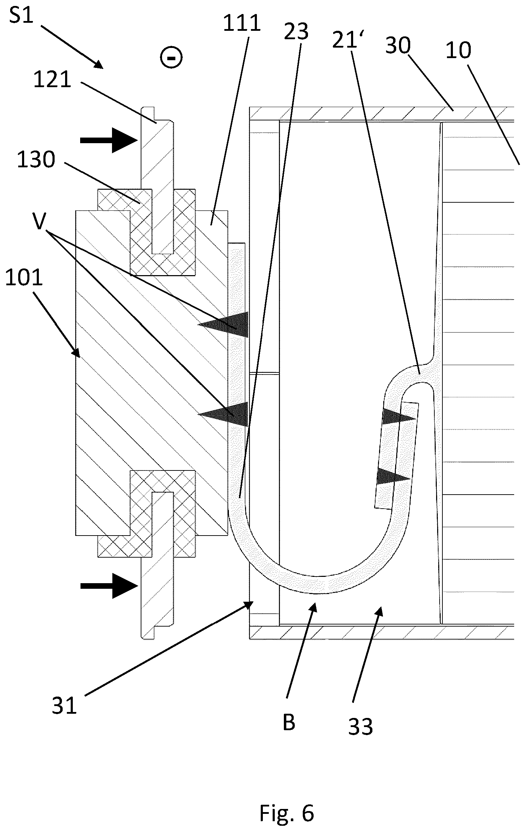

In einem anschließenden Schritt kann der Zelldeckel 121 um 90° geklappt werden, wobei die gebündelten Anodenableiter 21' und die Ableiterverlängerung 23 gefaltet und/oder gebogen werden. Dies erfolgt beispielsweise im Innenvolumen 33 des Zellgehäuses 30 und ist in Fig. 6 in einer seitlichen Schnittdarstellung gezeigt.

Die Fig. 6 zeigt weiterhin einen Schritt des erfindungsgemäßen Verfahrens, bei dem die erste Öffnung 31 des Zellgehäuses 30 durch den ersten Zelldeckel 121 bzw. den ersten Batteriepol 101 verschlossen wird.

Durch das Verschließen der ersten Öffnung 31 mit dem ersten Batteriepol 101 wird ein Abstand entlang der Längenrichtung L zwischen dem Kollektor 111 und dem Elektrodenpaket 10 reduziert, sodass neben den gebündelten Anodenableitern 21' auch die Ableiterverlängerung 23 in zumindest einem Biegebereich B gefaltet und/oder gebogen wird.

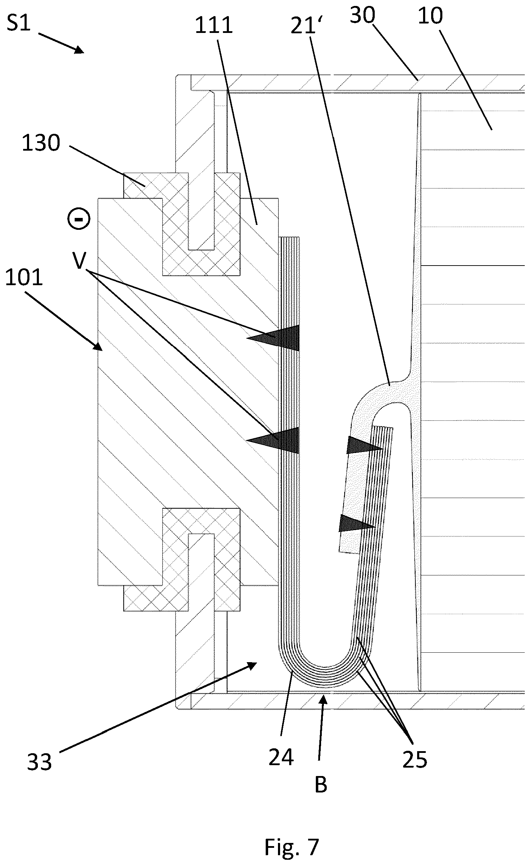

Analog zu der Fig. 6 wird in Fig. 7 eine seitliche Schnittdarstellung zum Veranschaulichen einer Ableiterverlängerung 24 gemäß einem weiteren Ausführungsbeispiel gezeigt. Im Unterschied zur in Fig. 6 gezeigten Ableiterverlängerung 23 in Form eines Vollmaterials, wird in Fig. 7 eine laminierte Ableiterverlängerung 24 verwendet.

Die laminierte Ableiterverlängerung 24 besteht aus einer Vielzahl von zumindest bereichsweise miteinander verbundenen Materiallagen 25. Im gezeigten Ausführungsbeispiel sind die jeweiligen Materiallagen 25 an den randseitigen Verbindungsstellen V miteinander verbunden.

Die jeweiligen Materiallagen 25 sind beispielhaft als dünne Kupferfolien ausgestaltet, wodurch eine derartige Ableiterverlängerung 24 mit geringer Kraft und auf engem Radius falten lässt. Hierdurch kann der erforderliche Bauraumbedarf für die Ableiterverlängerung 24 minimiert werden.

Nach dem Einpressen des ersten Zelldeckels 121 in die erste Öffnung 31 des Zellgehäuses 30 wird das Zellgehäuse 30 vollständig verschlossen. Eine Elektrolytlösung kann beispielhaft nach dem Verschließen des Zellgehäuses 30 über eine nicht gezeigte Einfüllöffnung in das Innenvolumen 33 des Zellgehäuses hineingeleitet werden. Hierdurch wird im dargestellten Ausführungsbeispiel eine Batteriezelle 100 fertiggestellt.

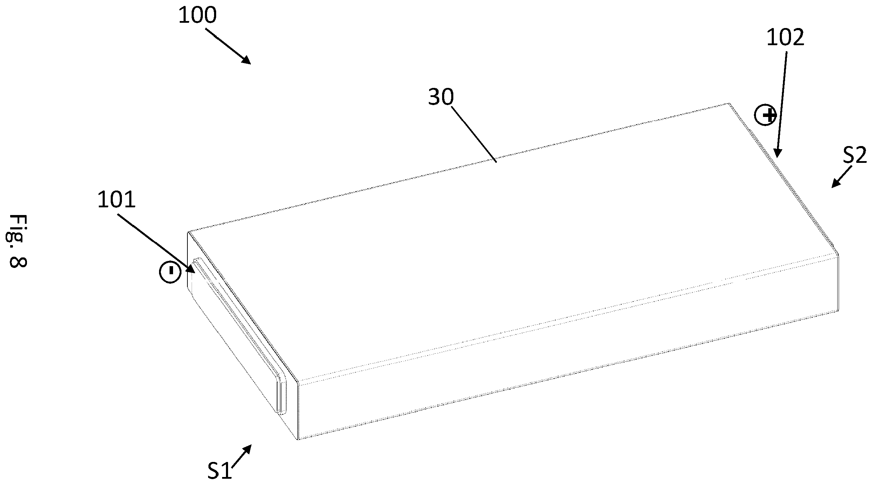

Die Fig. 8 zeigt eine perspektivische Darstellung einer durch das erfindungsgemäße Verfahren hergestellten Batteriezelle 100 gemäß einer Ausführungsform der Erfindung. Die Batteriezelle 100 ist in Form einer prismatischen Hardcase-Zelle ausgeführt.

Die Batteriezelle 100 besteht im Wesentlichen aus einem Zellgehäuse 30, welches in einem Innenvolumen 33 mindestens ein Elektrodenpaket 10 aufweist. Die Anodenfolien 11 des Elektrodenpakets 10 sind elektrisch leitend mit dem ersten Batteriepol 101 verbunden. Die Kathodenfolien 12 des Elektrodenpakets 10 sind elektrisch leitend mit dem zweiten Batteriepol 102 verbunden.

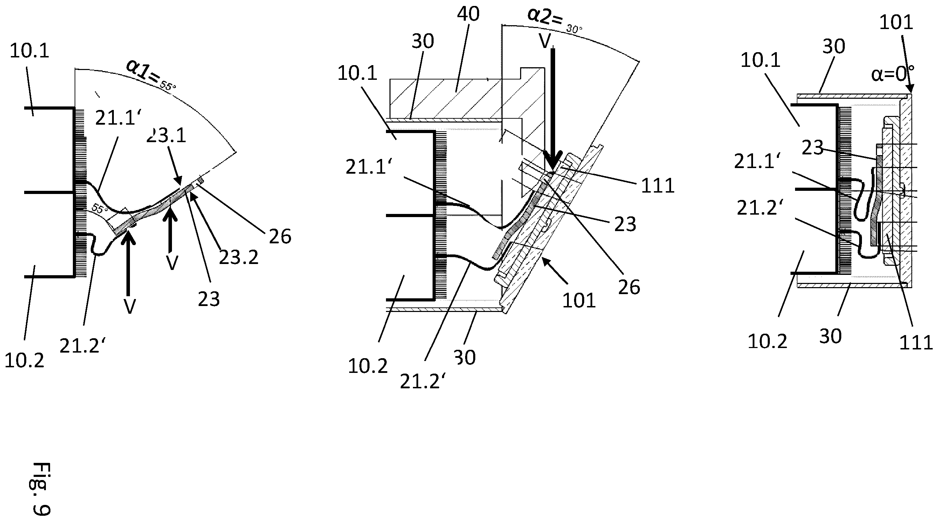

In der Fig. 9 sind seitliche Schnittdarstellungen zum Veranschaulichen eines erfindungsgemäßen Verfahrens zum Herstellen von Batteriezellen 100 gemäß einer weiteren Ausführungsform gezeigt. Dabei ist ein Anbringen der Ableiterverlängerung 23 an der ersten Seite S1 veranschaulicht.

Diese Ausführungsform des Verfahrens unterscheidet sich vom bisher beschriebenen Verfahren dahingehend, dass die Ableiterverlängerung 23 mit unterschiedlichen Winkeln α angeordnet wird, um einen optimalen Werkzeugzugang zum Einbringen von elektrisch leitenden Verbindungen V einzustellen. Weiterhin sind zwei Elektrodenpakete 10.1, 10.2 vorgesehen, die jeweils einen gebündelten Anodenableiter 21.1', 21.2' aufweisen. Beide Anodenableiter 21.1', 21.2' werden dabei mit einer Ableiterverlängerung 23 verbunden.

Hierbei wird die Ableiterverlängerung 23 mit einem ersten Winkel α1 gegenüber der ersten Seite S1 der Elektrodenpakete 10.1, 10.2 gewinkelt positioniert. Die Elektrodenpakete 10.1, 10.2 sind parallel zueinander angeordnet und schließen im dargestellten Ausführungsbeispiel randseitig bündig ab. Der erste Winkel α1 beträgt beispielsweise 55° und ermöglicht ein Einbringen von Laserschweißnähten V in Überlappungsbereiche zwischen der Ableiterverlängerung 23 und den Anodenableitern 21.1', 21.2'.

Die Ableiterverlängerung 23 kann mit Hilfe einer Haltevorrichtung 40 oder eines Greifers relativ zu den Anodenableitern 21.1', 21.2' und dem Kollektor 111 angeordnet und im Winkel α eingestellt werden.

Beispielhaft ist ein Anodenableiter 21.1' des ersten Elektrodenpakets 10.1 auf einer ersten Seite 23.1 der Ableiterverlängerung 23 und ein Anodenableiter 21.2' des zweiten Elektrodenpakets 10.2 auf einer zweiten Seite 23.2 der Ableiterverlängerung 23 elektrisch leitend gekoppelt. Zum Ermöglichen einer bündigen bzw. flachen Anbindung der Ableiterverlängerung 23 an den Kollektor 111 ist die Ableiterverlängerung 23 im Vorfeld gebogen ausgeführt. Dabei weist die Ableiterverlängerung 23 eine S-Form auf, welche einen Aufnahmeraum zwischen der zweiten Seite 23.2 der Ableiterverlängerung 23 und dem Kollektor 111 für die gebündelten Anodenableiter 21.2' bereitstellt.

Nach dem Verbinden der Anodenableiter 21.1', 21.2' mit der Ableiterverlängerung 23 werden die Elektrodenpakete 10.1, 10.2 in das Zellgehäuse 30 hineingeschoben. Anschließend wird der Batteriepol 101 mit der Ableiterverlängerung 23 elektrisch leitend verbunden. Hierzu wird die Ableiterverlängerung 23 mit den verbundenen Anodenableitern 21.1', 21.2' durch den Greifer 40 fixiert, um einen Werkzeugzugang für das Einbringen der elektrisch leitenden Verbindung V zu gewährleisten. Die Pfeile V veranschaulichen in der Fig. 9 beispielhaft einen Werkzeugzugang einer Laserschweiß-Vorrichtung.

Zum technisch einfachen Ausrichten der Ableiterverlängerung 23 mit dem Kollektor 111 ist eine ableiterseitige Ausrichthilfe 26 vorgesehen. Die ableiterseitige Ausrichthilfe 26 kann dazu eingesetzt werden, mit einer kollektorseitigen Ausrichthilfe zu wechselwirken. Die kollektorseitige Ausrichthilfe ist der Übersicht halber nicht dargestellt. Im dargestellten Ausführungsbeispiel ist die ableiterseitige Ausrichthilfe 26 als eine oder mehrere Durchgangsbohrungen ausgestaltet. Die kollektorseitige Ausrichthilfe kann in Form von zu den Durchgangsbohrungen korrespondierenden Stiften oder Ausbuchtungen ausgestaltet sein.

Zum Verbinden beider Anodenableiter 21.1', 21.2'mit der Ableiterverlängerung 23 wird der erste Winkel α1 konstant gehalten. Zum Verbinden der Ableiterverlängerung 23 mit dem Kollektor 111 kann der Greifer 40 einen zweiten Winkel α2, beispielsweise von 30°, einstellen. Das Verbinden der Ableiterverlängerung 23 mit dem Kollektor 111 kann beispielsweise durch Löten oder Schweißen erfolgen. Dabei kann die Ableiterverlängerung 23 beispielsweise unmittelbar an der Ausrichthilfe 26 geschweißt oder gelötet werden, um eine elektrisch leitfähige Verbindung auszubilden. Beispielhaft erfolgt die elektrisch leitende Verbindung zwischen der Ableiterverlängerung 23 und dem Kollektor 111 von der Ausrichthilfe 26 beabstandet an einem randseitigen Abschnitt der Ableiterverlängerung 23 in Form einer Überlappnaht.

Anschließend kann der Batteriepol 101 mit dem Kollektor 111 endseitig in einen Winkel von 0° gedreht werden, um das Zellgehäuse 30 zu verschließen.

Das Verfahren ist beispielhaft anhand der ersten Seite S1 der Batteriezelle 100 veranschaulicht. Analog hierzu kann das Verfahren auf der zweiten Seite S2 der Batteriezelle 100 mit Kathodenableitern 22 umgesetzt werden.

## Patentansprüche

1. Verfahren zum Herstellen einer Batteriezelle (100), mit zumindest zwei an gegenüberliegenden Seiten (S1, S2) angeordneten Batteriepolen (101, 102), wobei
- mindestens ein Elektrodenpaket (10) mit einer Vielzahl von Anodenfolien (11) und Kathodenfolien (12), welche durch Separatorfolien (13) voneinander getrennt sind, bereitgestellt wird, wobei die Anodenfolien (11) endseitig Anodenableiter (21) und die Kathodenfolien (12) endseitig Kathodenableiter (21) aufweisen, wobei die Anodenableiter (21) der Anodenfolien (11) an einer ersten Seite (S1) und die Kathodenableiter (22) der Kathodenfolien (12) an einer zweiten Seite (S2) des Elektrodenpakets (10) gebündelt werden,
- die Anodenableiter (21) und/oder Kathodenableiter (22) zumindest bereichsweise mit mindestens einer Ableiterverlängerung (23) elektrisch leitend verbunden werden,
- das mindestens eine mit mindestens einer Ableiterverlängerung (23) versehene Elektrodenpaket (10) in ein Zellgehäuse (30) hineingesetzt wird,
- die Anodenableiter (21) über die mindestens eine Ableiterverlängerung (23) mit einem Kollektor (111) eines ersten Batteriepols (101) und die Kathodenableiter (22) über die mindestens eine Ableiterverlängerung (23) mit einem Kollektor eines zweiten Batteriepols (102) elektrisch leitend verbunden werden,
- das Zellgehäuse (30) durch den ersten Batteriepol (101) und den zweiten Batteriepol (102) verschlossen wird.
**dadurch gekennzeichnet, dass** die Ableiterverlängerung (23) mindestens eine Ausrichthilfe (26) zum Ausrichten der Ableiterverlängerung (23) an dem Kollektor (111) des ersten Batteriepols (101) und/oder dem Kollektor des zweiten Batteriepols (102) aufweist, wobei die mit den Anodenableitern (21) und/oder Kathodenableiter (22) verbundene Ableiterverlängerung (23) mittels der Ausrichthilfe (26) an dem Kollektor (111) des ersten Batteriepols (101) und/oder dem Kollektor des zweiten Batteriepols (102) positioniert wird.

2. Verfahren nach Anspruch 1, wobei mindestens eine Ableiterverlängerung (23, 24) aus einem Vollmaterial oder aus einer Vielzahl von zumindest bereichsweise miteinander verbundenen oder nicht miteinander verbundenen Materiallagen (25) bereitgestellt wird, um die Anodenableiter (21) und/oder Kathodenableiter (22) zu verlängern.

3. Verfahren nach Anspruch 2, wobei mindestens eine Ableiterverlängerung (24) im Bereich von mindestens einer Biegestelle (B) durch mehrere im Bereich der Biegestelle (B) nicht verbundene Materiallagen (25) ausgebildet ist.

4. Verfahren nach einem der Ansprüche 1 bis 3, wobei die Anodenableiter (21) und/oder die Kathodenableiter (22) entlang einer Breitenrichtung (B) der Batteriezelle (100) zentriert oder dezentriert gebündelt werden.

5. Verfahren nach einem der Ansprüche 1 bis 4, wobei die gebündelten Anodenableiter (21') und/oder gebündelten Kathodenableiter (22') zu einem Stapel zusammengefasst und durch das Verbinden mit der mindestens einen Ableiterverlängerung (23) und/oder durch Einbringen von mindestens einer Verbindungsstelle (V) in gebündelter Form fixiert werden.

6. Verfahren nach einem der Ansprüche 1 bis 5, wobei die gebündelten Anodenableiter (21') und/oder gebündelten Kathodenableiter (22') zumindest bereichsweise mit mindestens einer folienförmigen oder plattenförmigen und/oder vorgebogenen Ableiterverlängerung (24) elektrisch leitend verbunden werden.

7. Verfahren nach Anspruch 6, wobei die mindestens eine vorgebogene Ableiterverlängerung (23) in Form eines Bogens oder S-förmig oder U-förmig vor dem elektrisch leitenden Verbinden mit den Anodenableitern (21) und/oder Kathodenableitern (22), insbesondere durch plastische Verformung, gebogen oder gefaltet wird.

8. Verfahren nach Anspruch 6 oder 7, wobei mindestens eine vorgebogene Ableiterverlängerung (23) zum Ausbilden einer elektrischen Verbindung mit einem Kollektor (111) zumindest bereichsweise elastisch flach verformt wird.

9. Verfahren nach einem der Ansprüche 1 bis 8, wobei mindestens zwei zueinander benachbarte Elektrodenpakete (10) bereitgestellt werden, wobei die gebündelten Anodenableiter (21') und/oder Kathodenableiter (22') eines ersten Elektrodenpakets (10) und eines zweiten Elektrodenpakets zumindest bereichsweise mit mindestens einer Ableiterverlängerung (23) elektrisch leitend verbunden werden,
wobei die Anodenableiter (23) des ersten Elektrodenpakets (10) zu den Anodenableitern des zweiten Elektrodenpakets entlang mindestens einer Raumrichtung (B, H, L) versetzt oder einander überlappend mit der Ableiterverlängerung (23) verbunden werden, und/oder
wobei die Kathodenableiter (22) des ersten Elektrodenpakets (10) zu den Kathodenableitern des zweiten Elektrodenpakets entlang mindestens einer Raumrichtung (B, H, L) versetzt oder einander überlappend mit der Ableiterverlängerung (23) verbunden werden.

10. Verfahren nach einem der Ansprüche 1 bis 9, wobei eine Ableiterverlängerung (23) für Anodenableiter (21) aus einer Materialzusammensetzung der Anodenableiter (21) und eine Ableiterverlängerung (23) für Kathodenableiter (22) aus einer Materialzusammensetzung der Kathodenableiter (22) bereitgestellt wird.

11. Verfahren nach einem der Ansprüche 1 bis 10, wobei die Anodenableiter (21) und/oder die Kathodenableiter (22) und/oder die mindestens eine Ableiterverlängerung (23) parallel zu einer Fläche mindestens eines Kollektors (111) ausgerichtet und zum elektrischen Verbinden gegen den Kollektor (111) gepresst werden, wobei nach dem elektrischen Verbinden der erste Batteriepol (101) und/oder der zweite Batteriepol (102) in Richtung des Zellgehäuses (30), insbesondere um einen Winkel von 90°, geklappt werden, um ein Innenvolumen (33) des Zellgehäuses (30) zu verschließen.

12. Verfahren nach Anspruch 11, wobei vor und/oder während des Klappens der Batteriepole (101, 102) mindestens eine Ableiterverlängerung (23) elastisch und/oder plastisch verformt wird.

13. Verfahren nach Anspruch 1, wobei die mindestens eine Ausrichthilfe (26) als mindestens eine Durchgangsbohrung ausgestaltet ist, welche dazu eingerichtet ist, mit mindestens einem Stift und/oder Ausbuchtung des Kollektors (111) zusammenzuwirken, wobei die mindestens eine an dem Kollektor (111) positionierte Ableiterverlängerung (23) an der Ausrichthilfe (26) und/oder von der Ausrichthilfe (26) beabstandet mit dem Kollektor (111) stoffschlüssig verbunden wird.

14. Verfahren nach einem der Ansprüche 9 bis 13, wobei die Ableiterverlängerung (23) mit einem ersten Winkel (α1) gegenüber der ersten Seite gewinkelt positioniert und die Anodenableiter (21') des ersten Elektrodenpakets (10) mit der Ableiterverlängerung (23) elektrisch leitend verbunden werden, wobei die Ableiterverlängerung (23) mit dem ersten Winkel (α1) oder mit einem zweiten Winkel (α2) gegenüber der ersten Seite positioniert und mit Anodenableitern (21') des zweiten Elektrodenpakets verbunden wird, wobei die Ableiterverlängerung (23) mit dem zweiten Winkel (α2) oder mit einem dritten Winkel (α3) gegenüber der ersten Seite gedreht und an dem Kollektor (111) des ersten Batteriepols (101) positioniert und mit dem Kollektor (111) verbunden wird.

15. Verfahren nach einem der Ansprüche 9 bis 14, wobei die Ableiterverlängerung (23) mit einem ersten Winkel (α1) gegenüber der zweiten Seite gewinkelt positioniert und die Kathodenableiter (22') des ersten Elektrodenpakets (10) mit der Ableiterverlängerung (23) elektrisch leitend verbunden werden, wobei die Ableiterverlängerung (23) mit dem ersten Winkel (α1) oder mit einem zweiten Winkel (α2) gegenüber der zweiten Seite positioniert und mit Kathodenableiter (22') des zweiten Elektrodenpakets verbunden wird, wobei die Ableiterverlängerung (23) mit dem zweiten Winkel (α2) oder mit einem dritten Winkel (α3) gegenüber der zweiten Seite gedreht und an dem Kollektor des zweiten Batteriepols (102) positioniert und mit dem Kollektor ()des zweiten Batteriepols (102) verbunden wird.

16. Batteriezelle (100), aufweisend mindestens ein Elektrodenpaket (10) mit einer Vielzahl von Anodenfolien (11) und Kathodenfolien (12), welche durch Separatorfolien (13) voneinander getrennt sind, wobei die Anodenfolien (11) an einer ersten Seite (S1) Anodenableiter (21) und die Kathodenfolien (12) an einer zweiten Seite (S2) Kathodenableiter (22) aufweisen und in einem Zellgehäuse (30) angeordnet sind, wobei die Anodenableiter (21) über eine Ableiterverlängerung (23) mit einem Kollektor (111) eines ersten Batteriepols (101) und/oder die Kathodenableiter über eine Ableiterverlängerung (23) mit einem Kollektor eines zweiten Batteriepols (102) elektrisch verbunden sind, wobei der erste Batteriepol (101) und der zweite Batteriepol (102) dazu eingerichtet sind, das Zellgehäuse (30) endseitig zu verschließen, **dadurch gekennzeichnet, dass** die Ableiterverlängerung (23) mindestens eine Ausrichthilfe (26) aufweist, wobei die mit den Anodenableitern (21) und/oder Kathodenableiter verbundene Ableiterverlängerung (23) mittels der Ausrichthilfe (26) an dem Kollektor (111) des ersten Batteriepols (101) und/oder dem Kollektor des zweiten Batteriepols (102) positioniert ist.

## Claims

1. Method for producing a battery cell (100) having at least two battery poles (101, 102) arranged on opposite sides (S1, S2), wherein
- at least one electrode pack (10) having a plurality of anode foils (11) and cathode foils (12) which are separated from one another by separator foils (13) is provided, the anode foils (11) having anode arresters (21) at the ends and the cathode foils (12) having cathode conductors (21) at the ends, the anode arresters (21) of the anode foils (11) being bundled on a first side (S1) and the cathode conductors (22) of the cathode foils (12) being bundled on a second side (S2) of the electrode packet (10),
- the anode arresters (21) and/or cathode conductors (22) are electrically conductively connected, at least in some areas, to at least one arrester extension (23),
- the at least one electrode package (10) provided with at least one arrester extension (23) is inserted into a cell housing (30),
- the anode arresters (21) are electrically conductively connected to a collector (111) of a first battery pole (101) via the at least one arrester extension (23) and the cathode conductors (22) are electrically conductively connected to a collector of a second battery pole (102) via the at least one arrester extension (23),
- the cell housing (30) is closed by the first battery pole (101) and the second battery pole (102).
**characterized in that** the arrester extension (23) has at least one alignment aid (26) for aligning the arrester extension (23) with the collector (111) of the first battery pole (101) and/or the collector of the second battery pole (102), wherein the arrester extension (23) connected to the anode arresters (21) and/or cathode conductors (22) is positioned on the collector (111) of the first battery pole (101) and/or the collector of the second battery pole (102) by means of the alignment aid (26).

2. Method according to claim 1, wherein at least one arrester extension (23, 24) is provided from a solid material or from a plurality of material layers (25) connected or not connected to each other at least in some areas, in order to extend the anode arresters (21) and/or cathode conductors (22).

3. Method according to claim 2, wherein at least one arrester extension (24) is formed in the region of at least one bending point (B) by a plurality of material layers (25) not connected in the region of the bending point (B).

4. Method according to one of claims 1 to 3, wherein the anode arresters (21) and/or the cathode conductors (22) are bundled centered or decentered along a width direction (B) of the battery cell (100).

5. Method according to one of claims 1 to 4, wherein the bundled anode arresters (21') and/or bundled cathode conductors (22') are combined into a stack and fixed in bundled form by connecting them to the at least one arrester extension (23) and/or by introducing at least one connection point (V).

6. Method according to one of claims 1 to 5, wherein the bundled anode arresters (21') and/or bundled cathode conductors (22') are electrically conductively connected, at least in some areas, to at least one foil-shaped or plate-shaped and/or pre-bent arrester extension (24).

7. Method according to claim 6, wherein the at least one pre-bent arrester extension (23) is bent or folded in the form of an arc or S-shaped or U-shaped before the electrically conductive connection to the anode arresters (21) and/or cathode conductors (22), in particular by plastic deformation.

8. Method according to claim 6 or 7, wherein at least one pre-bent arrester extension (23) is elastically deformed flat at least in some areas to form an electrical connection with a collector (111).

9. Method according to any one of claims 1 to 8, wherein at least two electrode packets (10) adjacent to each other are provided, wherein the bundled anode arresters (21') and/or cathode conductors (22') of a first electrode packet (10) and of a second electrode packet are electrically conductively connected at least in some areas to at least one arrester extension (23), wherein the anode arresters (23) of the first electrode packet (10) are connected to the anode arresters of the second electrode packet offset along at least one spatial direction (B, H, L) or overlapping each other with the arrester extension (23), and/or wherein the cathode conductors (22) of the first electrode packet (10) are connected to the cathode arresters of the second electrode packet offset along at least one spatial direction (B, H, L) or overlapping each other with the arrester extension (23).

10. Method according to any one of claims 1 to 9, wherein an arrester extension (23) for anode arresters (21) is provided from a material composition of the anode arresters (21) and an arrester extension (23) for cathode conductors (22) is provided from a material composition of the cathode conductors (22).

11. Method according to any one of claims 1 to 10, wherein the anode arresters (21) and/or the cathode conductors (22) and/or the at least one arrester extension (23) are aligned parallel to a surface of at least one collector (111) and pressed against the collector (111) for electrical connection, wherein, after the electrical connection, the first battery pole (101) and/or the second battery pole (102) are folded towards the cell housing (30), in particular by an angle of 90', in order to close an inner volume (33) of the cell housing (30).

12. Method according to claim 11, wherein before and/or during the folding of the battery poles (101, 102) at least one arrester extension (23) is elastically and/or plastically deformed.

13. Method according to claim 1, wherein the at least one alignment aid (26) is configured as at least one through-hole which is configured to cooperate with at least one pin and/or protrusion of the collector (111), wherein the at least one arrester extension (23) positioned on the collector (111) is cohesively connected to the collector (111) at the alignment aid (26) and/or at a distance from the alignment aid (26).

14. Method according to any one of claims 9 to 13, wherein the arrester extension (23) is positioned angled at a first angle (α1) with respect to the first side and the anode arresters (21') of the first electrode package (10) are electrically conductively connected to the arrester extension (23), wherein the arrester extension (23) is positioned at the first angle (α1) or at a second angle (α2) with respect to the first side and connected to anode arresters (21') of the second electrode pack, wherein the arrester extension (23) is rotated at the second angle (α2) or at a third angle (α3) with respect to the first side and positioned at the collector (111) of the first battery pole (101) and connected to the collector (111).

15. Method according to any one of claims 9 to 14, wherein the arrester extension (23) is positioned angled at a first angle (α1) with respect to the second side and the cathode conductors (22') of the first electrode pack (10) are electrically conductively connected to the arrester extension (23), wherein the arrester extension (23) is positioned at the first angle (α1) or at a second angle (α2) with respect to the second side and connected to cathode conductors (22') of the second electrode pack, wherein the arrester extension (23) is rotated at the second angle (α2) or at a third angle (α3) with respect to the second side and positioned at the collector of the second battery pole (102) and connected to the collector of the second battery pole (102).

16. Battery cell (100), having at least one electrode pack (10) with a plurality of anode foils (11) and cathode foils (12) which are separated from one another by separator foils (13), the anode foils (11) having anode arresters (21) on a first side (S1) and the cathode foils (12) having cathode conductors (22) on a second side (S2) and being arranged in a cell housing (30), wherein the anode arresters (21) are electrically connected via an arrester extension (23) to a collector (111) of a first battery pole (101) and/or the cathode conductors are electrically connected via an arrester extension (23) to a collector of a second battery pole (102), the first battery pole (101) and the second battery pole (102) being configured to close the end of the cell housing (30), **characterized in that** the arrester extension (23) has at least one alignment aid (26), the arrester extension (23) connected to the anode arresters (21) and/or cathode conductors being positioned on the collector (111) of the first battery pole (101) and/or the collector of the second battery pole (102) by means of the alignment aid (26).

## Revendications

1. Procédé de fabrication d'une cellule de batterie (100) comportant au moins deux pôles de batterie (101, 102) disposés sur des côtés opposés (S1, S2), consistant à
- fournir au moins un paquet d'électrodes (10) comprenant une pluralité de feuilles d'anode (11) et de feuilles de cathode (12) séparées les unes des autres par des feuilles séparatrices (13), les feuilles d'anode (11) comportant des conducteurs d'anode (21) à leurs extrémités et les feuilles de cathode (12) comportent des conducteurs de cathode (22) à leurs extrémités, les conducteurs d'anode (21) des feuilles d'anode (11) étant regroupés sur un premier côté (S1) et les conducteurs de cathode (22) des feuilles de cathode (12) étant regroupés sur un deuxième côté (S2) du paquet d'électrodes (10),
- relier de manière électriquement conductrice les conducteurs d'anode (21) et/ou les conducteurs de cathode (22) au moins localement à au moins un prolongement de conducteur (23),
- insérer ledit au moins un paquet d'électrodes (10), pourvu d'au moins un prolongement de conducteur (23), dans un boîtier de cellule (30),
- relier de manière électriquement conductrice les conducteurs d'anode (21), à un collecteur (111) d'un premier pôle de batterie (101) par l'intermédiaire dudit au moins un prolongement de conducteur (23), et relier de manière électriquement conductrice les conducteurs de cathode (22) à un collecteur d'un deuxième pôle de batterie (102) par l'intermédiaire dudit au moins un prolongement de conducteur (23),
- refermer le boîtier de cellule (30) par le premier pôle de batterie (101) et le deuxième pôle de batterie (102),
**caractérisé en ce que** le prolongement de conducteur (23) comprend au moins un organe d'aide à l'alignement (26) destiné à aligner le prolongement de conducteur (23) au niveau du collecteur (111) du premier pôle de batterie (102) et/ou au niveau du collecteur du deuxième pôle de batterie (102), sachant que le prolongement de conducteur (23) relié aux conducteurs d'anode (21) et/ou aux conducteurs de cathode (22) est positionné au niveau du collecteur (111) du premier pôle de batterie (101) et/ou au niveau du collecteur du deuxième pôle de batterie (102) au moyen de l'organe d'aide à l'alignement (26).

2. Procédé selon la revendication 1,
dans lequel au moins un prolongement de conducteur (23, 24) est réalisé en un matériau massif ou en une pluralité de couches de matériau (25) reliées entre elles au moins localement ou non reliées entre elles, afin de prolonger les conducteurs d'anode (21) et/ou les conducteurs de cathode (22).

3. Procédé selon la revendication 2,
dans lequel au moins un prolongement de conducteur (24) est formé, au niveau d'au moins un point de pliage (B), par plusieurs couches de matériau (25) non reliées entre elles au niveau du point de pliage (B).

4. Procédé selon l'une des revendications 1 à 3,
dans lequel les conducteurs d'anode (21) et/ou les conducteurs de cathode (22) sont regroupés de manière centrée ou décentrée le long d'une direction de largeur (B) de la cellule de batterie (100).

5. Procédé selon l'une des revendications 1 à 4,
dans lequel les conducteurs d'anode regroupés (21') et/ou les conducteurs de cathode regroupés (22') sont assemblés en un empilement et sont fixés sous forme regroupée en les reliant audit au moins un prolongement de conducteur (23) et/ou en intégrant au moins un point de jonction (V).

6. Procédé selon l'une des revendications 1 à 5,
dans lequel les conducteurs d'anode regroupés (21') et/ou les conducteurs de cathode regroupés (22') sont reliés de manière électriquement conductrice, au moins localement, à au moins un prolongement de conducteur (24) en forme de feuille ou de plaque et/ou pré-courbé.

7. Procédé selon la revendication 6,
dans lequel ledit au moins un prolongement de conducteur pré-courbé (23) est courbé ou plié en forme d'arc, en forme de S ou en forme de U avant d'être relié de manière électriquement conductrice aux conducteurs d'anode (21) et/ou aux conducteurs de cathode (22), en particulier par déformation plastique.

8. Procédé selon la revendication 6 ou 7,
dans lequel au moins un prolongement de conducteur pré-courbé (23) est déformé de manière élastique et à plat, au moins localement, pour former une connexion électrique avec un collecteur (111).

9. Procédé selon l'une des revendications 1 à 8,
dans lequel on fournit au moins deux paquets d'électrodes (10) adjacents l'un à l'autre, les conducteurs d'anode regroupés (21') et/ou les conducteurs de cathode regroupés (22') d'un premier paquet d'électrodes (10) et d'un deuxième paquet d'électrodes étant reliés de manière électriquement conductrice, au moins localement, à au moins un prolongement de conducteur (23),
les conducteurs d'anode (21) du premier paquet d'électrodes (10) sont reliés au prolongement de conducteur (23) de manière décalée par rapport aux conducteurs d'anode du deuxième paquet d'électrodes le long d'au moins une direction spatiale (B, H, L) ou en chevauchement les uns avec les autres, et/ou
les conducteurs de cathode (22) du premier paquet d'électrodes (10) sont reliés au prolongement de conducteur (23) de manière décalée par rapport aux conducteurs de cathode du deuxième paquet d'électrodes le long d'au moins une direction spatiale (B, H, L) ou en chevauchement les uns avec les autres.

10. Procédé selon l'une des revendications 1 à 9,
dans lequel un prolongement de conducteur (23) pour les conducteurs d'anode (21) est réalisé à partir d'une composition de matériau des conducteurs d'anode (21), et un prolongement de conducteur (23) pour les conducteurs de cathode (22) est réalisé à partir d'une composition de matériau des conducteurs de cathode (22).

11. Procédé selon l'une des revendications 1 à 10,
dans lequel les conducteurs d'anode (21) et/ou les conducteurs de cathode (22) et/ou ledit au moins un prolongement de conducteur (23) sont orientés parallèlement à une surface d'au moins un collecteur (111) et sont pressés contre le collecteur (111) pour les relier électriquement, et le premier pôle de batterie (101) et/ou le deuxième pôle de batterie (102) sont rabattus, après la liaison électrique, en direction du boîtier de cellule (30), en particulier selon un angle de 90°, afin de fermer un volume intérieur (33) du boîtier de cellule (30).

12. Procédé selon la revendication 11,
dans lequel, avant et/ou pendant le rabattement des pôles de batterie (101, 102), au moins un prolongement de conducteur (23) est déformé de manière élastique et/ou plastique.

13. Procédé selon l'une des revendications 1,
dans lequel ledit au moins un organe d'aide à l'alignement (26) est conçu comme au moins un trou traversant conçu pour coopérer avec au moins une tige et/ou un renflement du collecteur (111), et ledit au moins un prolongement de conducteur (23), positionné au niveau du collecteur (111), est relié par adhérence de matière au collecteur (111) au niveau de l'organe d'aide à l'alignement (26) et/ou à distance de l'organe d'aide à l'alignement (26).

14. Procédé selon l'une des revendications 9 à 13,
dans lequel le prolongement de conducteur (23) est positionné en formant un premier angle (α1) par rapport au premier côté, et les conducteurs d'anode (21') du premier paquet d'électrodes (10) sont reliés de manière électriquement conductrice au prolongement de conducteur (23), le prolongement de conducteur (23) est positionné selon le premier angle (α1) ou selon un deuxième angle (α2) par rapport au premier côté et est relié aux conducteurs d'anode (21') du deuxième paquet d'électrodes, et le prolongement de conducteur (23) est tourné du deuxième angle (α2) ou d'un troisième angle (α3) par rapport au premier côté et est positionné au niveau du collecteur (111) du premier pôle de batterie (101) et est relié au collecteur (111).

15. Procédé selon l'une des revendications 9 à 14,
dans lequel le prolongement de conducteur (23) est positionné en formant un premier angle (α1) par rapport au deuxième côté, et les conducteurs de cathode (22') du premier paquet d'électrodes (10) sont reliés de manière électriquement conductrice au prolongement de conducteur (23), le prolongement de conducteur (23) est positionné selon le premier angle (α1) ou selon un deuxième angle (α2) par rapport au deuxième côté et est relié au conducteur de cathode (22') du deuxième paquet d'électrodes, et le prolongement de conducteur (23) est tourné du deuxième angle (α2) ou d'un troisième angle (α3) par rapport au deuxième côté et est positionné au niveau du collecteur du deuxième pôle de batterie (102) et est relié au collecteur du deuxième pôle de batterie (102).

16. Cellule de batterie (100) comprenant au moins un paquet d'électrodes (10) muni d'une pluralité de feuilles d'anode (11) et de feuilles de cathode (12) séparées les unes des autres par des feuilles séparatrices (13), les feuilles d'anode (11) comportant, sur un premier côté (S1), des conducteurs d'anode (21), et les feuilles de cathode (12) comportant, sur un deuxième côté (S2), des conducteurs de cathode (22), et étant disposées dans un boîtier de cellule (30), les conducteurs d'anode (21) étant reliés à un collecteur (111) d'un premier pôle de batterie (101) par l'intermédiaire d'un un prolongement de conducteur (23), et/ou les conducteurs de cathode étant reliés de manière électriquement conductrice à un collecteur d'un deuxième pôle de batterie (102) par l'intermédiaire d'un prolongement de conducteur (23), le premier pôle de batterie (101) et le deuxième pôle de batterie (102) étant conçus pour refermer le boîtier de cellule (30) à ses extrémités, **caractérisée en ce que** le prolongement de conducteur (23) comprend au moins un organe d'aide à l'alignement (26), le prolongement de conducteur (23) relié aux conducteurs d'anode (21) et/ou aux conducteurs de cathode étant positionné au niveau du collecteur (111) du premier pôle de batterie (101) et/ou au niveau du collecteur du deuxième pôle de batterie (102) au moyen de l'organe d'aide à l'alignement (26).
